# EUROPEAN PATENT APPLICATION

(11) **EP 4 310 383 A1**
(43) Date of publication of application: **24.01.2024**
(21) Application number: 22794599.5
(22) Date of filing: 13.04.2022
(51) Int. Cl.: F16M 11/04, F16M 11/10, F16M 13/02, G06F 1/16, F16C 11/04, F16H 3/097

(54) **SUPPORTING MECHANISM AND ELECTRONIC DEVICE**

(30) Priority: 26.04.2021 CN 202120875900 U
(71) Applicant: Huawei Technologies Co., Ltd., Shenzhen, Guangdong 518129 (CN)
(72) Inventor: CHENG, Haiyu, Shenzhen, Guangdong 518129 (CN); LI, Ruifan, Shenzhen, Guangdong 518129 (CN); AN, Yang, Shenzhen, Guangdong 518129 (CN)
(74) Representative: Goddar, Heinz J.
(86) International application number: PCT/CN2022/086653
(87) International publication number: WO 2022/228128

(57) **Abstract**

A support mechanism (100) is provided, and includes a base plate (10), a connecting plate (20), a support plate (30), and a gearbox (40). The connecting plate (20) is rotatably connected to the base plate (10) to be opened or closed relative to the base plate (10). The support plate (30) is rotatably connected to the connecting plate (20) through the gearbox (40), and is located on a side that is of the connecting plate (20) and that faces away from the base plate (10). A connection between the gearbox (40) and the support plate (30) includes an engaged state and a decoupled state. When the connecting plate (20) rotates within a first included angle (A) relative to the base plate (10), the gearbox (40) and the support plate (30) are in the engaged state, the connecting plate (20) drives, through the gearbox (40), the support plate (30) to rotate, and a rotation speed of the support plate (30) is greater than a rotation speed of the connecting plate (20). When the connecting plate (20) rotates between the first included angle (A) and a second included angle (B) relative to the base plate (10), the gearbox (40) and the support plate (30) are in the decoupled state, and the support plate (30) is static relative to the base plate (10).

## Description

This application claims priority to Chinese Patent Application No. 202120875900.6, filed with the China National Intellectual Property Administration on April 26, 2021 and entitled "SUPPORT MECHANISM AND ELECTRONIC DEVICE", which is incorporated herein by reference in its entirety.

### TECHNICAL FIELD

This application relates to the field of electronic devices, and in particular, to a support mechanism and an electronic device including the support mechanism.

### BACKGROUND

An electronic device such as a notebook computer or a smart tablet usually needs an apparatus such as a keyboard or a touchpad to implement an input function. In an input process, a screen of the notebook computer or the smart tablet is in an open state relative to the apparatus such as the keyboard, and an included angle between the screen of the notebook computer or the smart tablet and the apparatus such as the keyboard is usually greater than 90 degrees. The screen or the tablet tends to tilt back because a center of gravity of the screen or the tablet is far away from the keyboard. Therefore, the screen or the tablet needs to be supported.

Currently, a support mechanism is mostly used in a form of a fixed angle, and a user cannot adjust a tilt angle of the screen or the tablet. In addition, the support mechanism is usually opened manually. The user needs to set up the support mechanism to form support when flipping the screen or the tablet, to perform a subsequent input step. The operation is not convenient.

### SUMMARY

An objective of this application is to provide a support mechanism, so that support can be automatically formed in a process of flipping a screen or a tablet, and a tilt angle of the screen or the tablet can be further adjusted after the support is stable. In addition, this application further relates to an electronic device including the support mechanism.

According to a first aspect, this application relates to a support mechanism, including a base plate, a connecting plate, a support plate, and a gearbox. The connecting plate is rotatably connected to the base plate to be opened or closed relative to the base plate. The support plate is rotatably connected to the connecting plate through the gearbox, and the support plate is located on a side that is of the connecting plate and that faces away from the base plate.

A connection between the gearbox and the support plate includes an engaged state and a decoupled state. In a process in which the connecting plate is opened from a closed state to a first included angle relative to the base plate, the gearbox and the support plate are in the engaged state. The connecting plate drives, through the gearbox, the support plate to rotate. A rotation speed of the support plate is greater than a rotation speed of the connecting plate. In a process in which the connecting plate is opened from the first included angle to a second included angle relative to the base plate, the gearbox and the support plate are in a released state. The connecting plate does not drive the support plate to rotate. The second included angle is greater than the first included angle.

In this application, the support mechanism implements a function that the connecting plate can be rotatably opened relative to the base plate through a rotatable connection between the connecting plate and the base plate. The support plate can also rotate under a drive of the gearbox through a rotatable connection between the connecting plate and the support plate in a process in which the connecting plate is rotatably opened. When the connecting plate rotates within the first included angle relative to the base plate, a rotation speed of the support plate is higher with the help of the gearbox. Therefore, when the connecting plate rotates to the first included angle, the support plate can rotate to a larger angle relative to the base plate, to support the connecting plate, thereby avoiding that a center of gravity of the connecting plate is outside the support mechanism.

After the connecting plate rotates beyond the first included angle relative to the base plate, the gearbox is decoupled from the support plate, and the connecting plate may further rotate relative to the base plate to adjust a tilt angle. The support plate and the base plate are relatively fixed to form reliable support for the connecting plate that adjusts the tilt angle, so that the center of gravity of the connecting plate is always within the support mechanism, thereby preventing the support mechanism from tilting back and flipping.

It may be understood that, in a process of retracting the connecting plate, when the connecting plate rotates between the second included angle and the first included angle, the support plate and the connecting plate are still in a mutually decoupled state. When the connecting plate rotates back to the first included angle, the support plate is linked to the connecting plate again, and is retracted to the base plate together with the connecting plate at a higher rotation speed.

In this application, the support mechanism implements reliable support for the connecting plate, and implements an adjustable tilt angle of the connecting plate. In addition, in this application, the support mechanism can further automatically implement opening and retracting the support plate only through angle adjustment of the connecting plate, thereby facilitating an operation, and improving user experience.

In a possible implementation, the gearbox includes an input shaft, an intermediate shaft, and an output shaft. The input shaft is fixedly connected to the connecting plate, the output shaft is fixedly connected to the support plate, and the intermediate shaft includes, along a length direction of the intermediate shaft, a first gear and a second gear that are opposite to each other. The output shaft cooperates with the second gear for transmission. The input shaft cooperates with the first gear for transmission. A quantity of teeth of the first gear is less than a quantity of teeth of the second gear, so that the rotation speed of the support plate is greater than the rotation speed of the connecting plate.

In this implementation, the gearbox implements rotation action transfer between the connecting plate and the support plate through cooperation of the input shaft, the intermediate shaft, and the output shaft. In addition, a tooth quantity difference between the first gear and the second gear is set to implement effect that the rotation speed of the support plate is greater than the rotation speed of the connecting plate.

In a possible implementation, the quantity of teeth of the first gear is half of the quantity of teeth of the second gear.

In this implementation, a ratio of the quantity of teeth of the first gear to the quantity of teeth of the second gear is set, so that the rotation speed of the support plate is approximately twice the rotation speed of the connecting plate. In this way, when the support plate rotates to a 180-degree included angle with the base plate, the connecting plate is approximately at a 90-degree included angle with the base plate.

In a possible implementation, an engaged portion and a decoupled portion are disposed along a circumferential direction and are disposed at a matching position between the input shaft and the intermediate shaft. When the gearbox and the support plate are in the engaged state, the engaged portion and the first gear are engaged with each other. When the gearbox and the support plate are in the decoupled state, the decoupled portion slides relative to the first gear.

In this implementation, the gearbox implements a conversion action of the engaged state and the decoupled state between the gearbox and the support plate through cooperation between the input shaft and the intermediate shaft. The engaged portion and the decoupled portion are arranged along the circumferential direction. When the input shaft rotates to the engaged portion to cooperate with the intermediate shaft, the input shaft and the intermediate shaft are engaged and can transfer rotation power. When the input shaft rotates to the decoupled portion to cooperate with the intermediate shaft, the input shaft and the intermediate shaft are slidable with each other, and the rotation power of the input shaft is no longer transferred to the intermediate shaft, so that the linkage action between the support plate and the connecting plate is released.

In a possible implementation, a first protruding shoulder is further disposed at the matching position between the input shaft and the intermediate shaft. The first protruding shoulder is located along a length direction of the input shaft and is located on a side of the engaged portion. A first groove is provided at a position that is of the intermediate shaft and that is corresponding to the first protruding shoulder. When the gearbox and the support plate are in the decoupled state, the first protruding shoulder extends into the first groove to prevent the intermediate shaft from rotating reversely relative to the input shaft.

In this implementation, the first protruding shoulder cooperates with the first groove to prevent the intermediate shaft from rotating reversely relative to the input shaft, thereby ensuring a position of the support plate relative to the base plate, so that the support plate can continuously provide reliable support for the connecting plate.

In a possible implementation, the first protruding shoulder is located on a side that is of the engaged portion and the decoupled portion and that faces away from the first gear.

In this implementation, the position of the first protruding shoulder allows the first groove to be located on a side that is of the first gear and that faces away from the second gear, so that a shape of the intermediate shaft is more convenient for processing and manufacturing, thereby reducing costs of the support mechanism.

In a possible implementation, a second protruding shoulder is further disposed at the matching position between the input shaft and the intermediate shaft. The second protruding shoulder is also located along the length direction of the input shaft and is located on a side of the engaged portion, and a second groove is provided at a position that is of the intermediate shaft and that is corresponding to the second protruding shoulder. When the gearbox and the support plate are in the decoupled state, the second protruding shoulder cooperates with the second groove to limit a rotation angle of the input shaft relative to the base plate.

In this implementation, cooperation between the second protruding shoulder and the second groove can limit the rotation angle of the input shaft relative to the base plate, that is, limit a maximum rotation angle between the connecting plate and the base plate, thereby avoiding contact interference formed between the connecting plate and the support plate.

In a possible implementation, the second protruding shoulder is located between the first protruding shoulder and the engaged portion with the decoupled portion.

In this implementation, because a structure of the first groove is closer to a geometric center of the intermediate shaft than a structure of the second groove, the first groove is provided at a position that is of the second groove and that faces away from the engaged portion and the decoupled portion, so that the first groove is provided on a relative outer side of the intermediate shaft. This is more conducive for processing and manufacturing of the first groove and the second groove, and costs of the support mechanism can be further reduced.

In a possible implementation, a rotation axis of the input shaft is collinear with a rotation axis of the output shaft.

In this implementation, the rotation axis of the input shaft is collinear with the rotation axis of the output shaft, so that a volume of the gearbox can be reduced.

In a possible implementation, a damping member is further disposed in the gearbox. The damping member is sleeved on the input shaft and is configured to implement positioning in a process in which the connecting plate rotates relative to the base plate.

In this implementation, the damping member is sleeved on the input shaft, to implement linkage to the connecting plate. The damping member helps the connecting plate to hover at any rotation angle in the rotation process relative to the base plate, and keeps the position of the connecting plate stable.

In a possible implementation, the gearbox includes a housing and a first limiting member, the input shaft, the intermediate shaft, and the output shaft are all accommodated in an inner cavity of the housing. The first limiting member is sleeved on the input shaft, a first limiting block is further convexly disposed at a position that is of the inner cavity and that is corresponding to the first limiting member, and the first limiting block is configured to cooperate with the first limiting member to limit the rotation angle of the input shaft relative to the base plate. And/or the gearbox includes a second limiting member, the second limiting member is sleeved on the output shaft, the second limiting block is further convexly disposed at a position that is of the inner cavity and that is corresponding to the second limiting member, and the second limiting block is configured to cooperate with the second limiting member to limit a rotation angle of the output shaft relative to the base plate.

In this implementation, the gearbox further limits the rotation angle of the output shaft relative to the base plate by using the first limiting member sleeved on the input shaft and/or the second limiting member sleeved on the output shaft. The first limiting member and the second limiting member can assist in cooperation between the second protruding shoulder and the second groove, to jointly limit a rotation action of the connecting plate, thereby avoiding a case that a flipping angle of the connecting plate relative to the base plate is excessively large due to a failure of a component.

In a possible implementation, the support mechanism further includes a rotating plate and a sliding plate. The rotating plate is located between the support plate and the sliding plate, and is rotatably connected to both the support plate and the sliding plate. The sliding plate is further slidably connected to the connecting plate.

In this implementation, the support plate can form support for the connecting plate by using the rotating plate and the sliding plate, so that when the connecting plate rotates within a range greater than a first angle, the connecting plate can hover at any angle relative to the base plate with the support of the rotating plate and the sliding plate.

According to a second aspect, this application relates to an electronic device, including a display apparatus, an input apparatus, and the support mechanism provided in the first aspect of this application. The display apparatus is fixedly connected to the connecting plate, the input apparatus is constructed on a base plate of the support mechanism, the input apparatus is located on a side that is of the base plate and that faces the connecting plate, and the input apparatus and the display apparatus are in a communication connection.

In this implementation, the electronic device may be a notebook computer or a smart tablet with a protective case. The display apparatus is fixed on the connecting plate, so that the display apparatus can be flipped relative to the base plate on which a keyboard is constructed, and is supported by the support plate. The support mechanism in this application may be constructed as a housing of the notebook computer or a protective case of the smart tablet. In the process of folding and unfolding, only the connecting plate needs to be operated, which is easy and convenient.

In a possible implementation, the connecting plate includes a positioning groove. The positioning groove is configured to accommodate and fasten the display apparatus; and/or the connecting plate includes a magnetic component, and the magnetic member is configured to fasten the display apparatus in an attachment and adsorption manner.

In this implementation, the display apparatus may be fastened to the connecting plate through the positioning groove and/or magnetic component adsorption. A connection position between the positioning groove and the display apparatus is relatively fixed, and the magnetic component adsorption facilitates quick connection or separation of the display apparatus and the connecting plate.

In a possible implementation, a communication interface is further provided in the positioning groove of the connecting plate. When the display apparatus is fixedly connected to the connecting plate, a communication connection between the display apparatus and the input apparatus may be implemented through the communication interface. The communication interface may be implemented in a POGO PIN manner.

### BRIEF DESCRIPTION OF DRAWINGS

FIG. 1 is a schematic diagram of an electronic device according to an embodiment of this application;
FIG. 2 is a schematic diagram of an electronic device in a use state according to an embodiment of this application;
FIG. 3 is a schematic diagram of an exploded structure of an electronic device according to an embodiment of this application;
FIG. 4 is a schematic diagram of a structure of an electronic device in a folded state according to an embodiment of this application;
FIG. 5 is a schematic diagram of a structure of an electronic device in an opening process according to an embodiment of this application;
FIG. 6 is a schematic diagram of a structure of an electronic device that is opened to a first included angle formed between a support plate and a base plate according to an embodiment of this application;
FIG. 7 is a schematic diagram of a structure of an electronic device that is opened beyond a first included angle between a support plate and a base plate according to an embodiment of this application;
FIG. 8 is a schematic diagram of a structure of an electronic device in a folded state according to another embodiment of this application;
FIG. 9 is a schematic diagram of a structure of an electronic device in an opening process according to another embodiment of this application;
FIG. 10 is a schematic diagram of a structure of an electronic device that is opened to a first included angle formed between a support plate and a base plate according to another embodiment of this application;
FIG. 11 is a schematic diagram of a structure of an electronic device that is opened beyond a first included angle between a support plate and a base plate according to another embodiment of this application;
FIG. 12 is a schematic diagram of a partial structure of a connecting plate in a support mechanism according to an embodiment of this application;
FIG. 13 is a schematic diagram of a structure of a gearbox in a support mechanism according to an embodiment of this application;
FIG. 14 is a schematic diagram of an exploded structure of a gearbox in a support mechanism according to an embodiment of this application;
FIG. 15 is a schematic diagram of an exploded structure of a housing of a gearbox in a support mechanism according to an embodiment of this application;
FIG. 16 is a schematic diagram of an exploded structure of a first segment of a housing of a gearbox in a support mechanism according to an embodiment of this application;
FIG. 17 is a schematic diagram of an exploded structure of a second segment of a housing of a gearbox in a support mechanism according to an embodiment of this application;
FIG. 18 is a schematic diagram of a transmission structure of a gearbox in a support mechanism according to an embodiment of this application;
FIG. 19 is a schematic diagram of a structure of an intermediate shaft of a gearbox in a support mechanism according to an embodiment of this application;
FIG. 20 is a schematic diagram of a structure of an input shaft of a gearbox in a support mechanism according to an embodiment of this application;
FIG. 21 is a schematic side view of a structure of an input shaft of a gearbox in a support mechanism according to an embodiment of this application;
FIG. 22 is a schematic diagram of a structure of an output shaft of a gearbox in a support mechanism according to an embodiment of this application;
FIG. 23 is a schematic diagram of a structure of an input shaft and an intermediate shaft in a cooperation state in a gearbox in a support mechanism according to an embodiment of this application;
FIG. 23a is a schematic side view of a structure of a support mechanism in the cooperation state in FIG. 23 according to an embodiment of this application;
FIG. 24 is a schematic diagram of a structure of an input shaft and an intermediate shaft in another cooperation state in a gearbox in a support mechanism according to an embodiment of this application;
FIG. 24a is a schematic side view of a structure of a support mechanism in the cooperation state in FIG. 24 according to an embodiment of this application;
FIG. 25 is a schematic diagram of a structure of an input shaft and an intermediate shaft in another cooperation state in a gearbox in a support mechanism according to an embodiment of this application;
FIG. 25a is a schematic side view of a structure of a support mechanism in the cooperation state in FIG. 25 according to an embodiment of this application;
FIG. 26 is a schematic diagram of a structure of an input shaft and an intermediate shaft in another cooperation state in a gearbox in a support mechanism according to an embodiment of this application;
FIG. 26a is a schematic side view of a structure of a support mechanism in the cooperation state in FIG. 26 according to an embodiment of this application;
FIG. 27 is a schematic diagram of a structure of an input shaft and an intermediate shaft in another cooperation state in a gearbox in a support mechanism according to an embodiment of this application; and
FIG. 27a is a schematic side view of a structure of a support mechanism in the cooperation state in FIG. 27 according to an embodiment of this application.

### DESCRIPTION OF EMBODIMENTS

The following describes technical solutions in embodiments of this application with reference to accompanying drawings in the embodiments of this application. Apparently, the described embodiments are merely some but not all of embodiments of this application. All other embodiments obtained by a person of ordinary skill in the art based on the embodiments of this application without creative efforts shall fall within the protection scope of this application.

In this specification, the serial numbers, such as "first" and "second", of components are merely intended to distinguish between the described objects, and do not have any sequential or technical meaning. Unless otherwise specified, the "connection" in this application includes a direct connection and an indirect connection. In descriptions of this application, it should be understood that an orientation or a position relationship indicated by the terms "above", "below", "front", "back", "top", "bottom", "inside", "outside", and the like is based on an orientation or a position relationship shown in the accompanying drawings, and is merely intended for ease of describing this application and simplifying description, but does not indicate or imply that a described apparatus or element needs to have a specific orientation or be constructed and operated in a specific orientation. Therefore, such terms shall not be understood as a limitation on this application.

In this application, unless otherwise specified and limited, when a first feature is "above" or "below" a second feature, the first feature may be in direct contact with the second feature, or the first feature may be in indirect contact with the second feature through an intermediate medium. In addition, that the first feature is "above" or "over" the second feature may be that the first feature is right above or obliquely above the second feature, or merely mean that a horizontal height of the first feature is greater than that of the second feature. That the first feature is "below" or "under" the second feature may be that the first feature is right below or obliquely below the second feature, or merely mean that a horizontal height of the first feature is less than that of the second feature.

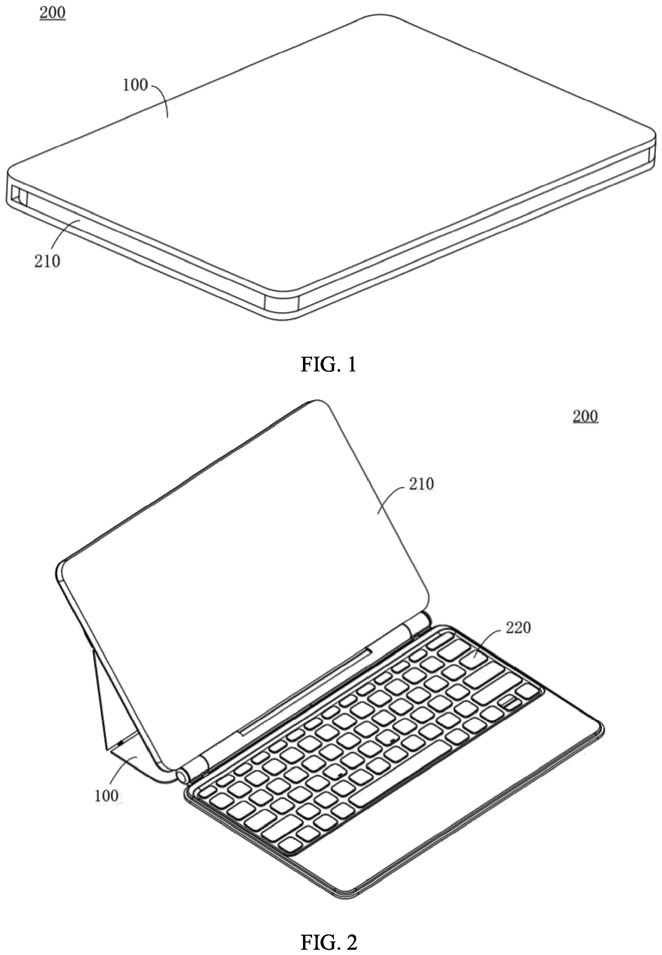

Refer to FIG. 1. An electronic device 200 provided in an embodiment of this application includes a protective case and a display apparatus 210. The display apparatus 210 is plate-shaped, and has two opposite planes. The protective case is a foldable structure. As shown in FIG. 1, the electronic device 200 is in a folded state. In this case, the protective case is folded. The protective case separately shields the two opposite planes of the display apparatus 210, and accommodates the display apparatus 210 in space formed by folding the protective case.

It may be understood that, in this embodiment, the electronic device 200 may be a smart tablet with a protective case, the display apparatus 210 is a smart tablet body, and the protective case may be implemented by a support mechanism 100 provided in this application. In this case, the display apparatus 210 is connected to the support mechanism 100 in a detachable manner, and the display apparatus 210 may be detached from the support mechanism 100 for independent use. In some other embodiments, the electronic device 200 may be a mobile terminal such as a mobile phone or an e-book, and may also be detached from the support mechanism 100. Alternatively, in some other embodiments, the electronic device 200 is a notebook computer. In this case, the support mechanism 100 is a housing of the notebook computer, and the display apparatus 210 is fixedly connected to the support mechanism 100.

FIG. 2 shows a use state of an electronic device 200. As shown in FIG. 2, a support mechanism 100 is flipped open, and in this case, a display surface of a display apparatus 210 faces a user. Further, an input apparatus 220 may be disposed on a side that is of the support mechanism 100 and that is not connected to the display apparatus 210. The input apparatus 220 is in a communication connection with the display apparatus 210, and is configured to implement an input operation of the user.

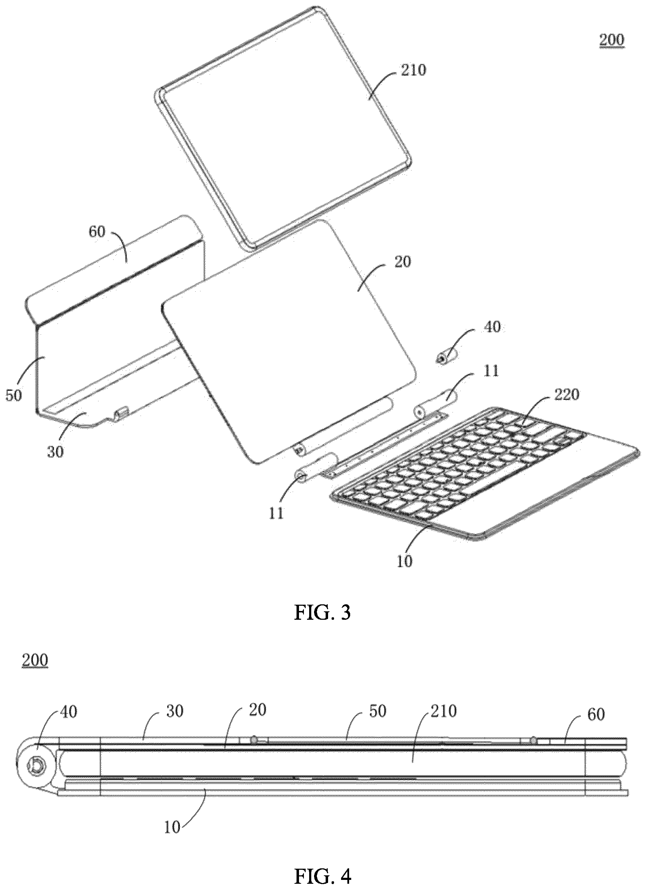

FIG. 3 is a schematic exploded diagram of an electronic device 200 according to this application. A support mechanism 100 is also shown in an exploded view. The support mechanism 100 includes a base plate 10, a connecting plate 20, a support plate 30, and a gearbox 40. The connecting plate 20 is configured to be fixedly connected to a display apparatus 210, and an input apparatus 210 is disposed on the base plate 10. The connecting plate 20 is rotatably connected to the base plate 10, to implement the two states of the electronic device 200 in FIG. 1 and FIG. 2: the folded (closed) state and the use (opened) state. Specifically, a rotating shaft 11 is fixedly connected to the base plate 10, and the connecting plate 20 is rotatably connected to the base plate 10 by the rotating shaft 11, and drives the display apparatus 210 fixedly connected to the connecting plate 20 to flip relative to the base plate 10.

The support plate 30 is rotatably connected to the connecting plate 20 through the gearbox 40, and the support plate 30 is located on a side that is of the connecting plate 20 and that faces away from the base plate 10. In this embodiment, the support mechanism 100 further includes a rotating plate 50 and a sliding plate 60. The rotating plate 50 is located on a side that is of the support plate 30 and that is away from the gearbox 40, and is rotatably connected to the support plate 30. The sliding plate 60 is located on a side that is of the rotating plate 50 and that is away from the support plate 30. The sliding plate 60 is rotatably connected to the rotating plate 50, and is also slidably connected to the connecting plate 20. To be specific, the rotating plate 50 is connected between the support plate 30 and the sliding plate 60, and the rotating plate 50 is rotatably connected to both the support plate 30 and the sliding plate 60.

In the support mechanism 100 in this application, a connection between the gearbox 40 and the support plate 30 includes two states: an engaged state and a decoupled state. When the connecting plate 20 rotates within a first included angle A relative to the base plate 10, the gearbox 40 and the support plate 30 are in the engaged state. In this case, the connecting plate 20 may be driven by the gearbox 40 to drive the support plate 30 to rotate synchronously relative to the base plate 10. In addition, with a transmission ratio of the gearbox 40, a rotation speed of the support plate 30 relative to the base plate 10 is greater than a rotation speed of the connecting plate 20 relative to the base plate 10. When the connecting plate 20 rotates between the first included angle A and a second included angle B (where the second included angle B is greater than the first included angle A) relative to the base plate 10, the gearbox 40 and the support plate 30 are in a released state. In this case, the connecting plate 20 no longer drives the support plate 30 to rotate, and the support plate 30 is static relative to the base plate 10.

It may be understood that, because the gearbox 40 is connected between the support plate 30 and the connecting plate 20, a state of mutual linkage or a state of mutual release is formed between the support plate 30 and the connecting plate 20 with the help of the gearbox 40.

For details, refer to FIG. 4. When the support mechanism 100 is in the folded state shown in FIG. 1, the connecting plate 20 and the base plate 10 are approximately parallel to each other. In this case, the display apparatus 210 is located between the connecting plate 20 and the base plate 10. It may be understood that the input apparatus 220 is located on a surface that is of the base plate 10 and that is close to the connecting plate 20. In this case, the display apparatus 210 and the input apparatus 220 are in contact relative to each other, and a back of the display apparatus 210 and a back of the input apparatus 220 are respectively protected by the connecting plate 20 and the base plate 10.

The support plate 30 is also approximately parallel to the connecting plate 20. The support plate 30 is located on a side of the connecting plate 20 and that faces away from the display apparatus 210, and may be in contact with and attached to the connecting plate 20. In this embodiment, the rotating plate 50 and the sliding plate 60 are also retracted with the support plate 30. The rotating plate 50 and the sliding plate 60 are approximately flush with the support plate 30, and are attached to a side that is of the connecting plate 20 and that faces away from the display apparatus 210. In this case, an overall volume of the support mechanism 100 after being folded in this application is relatively small, so that the electronic device 200 can be easily stowed.

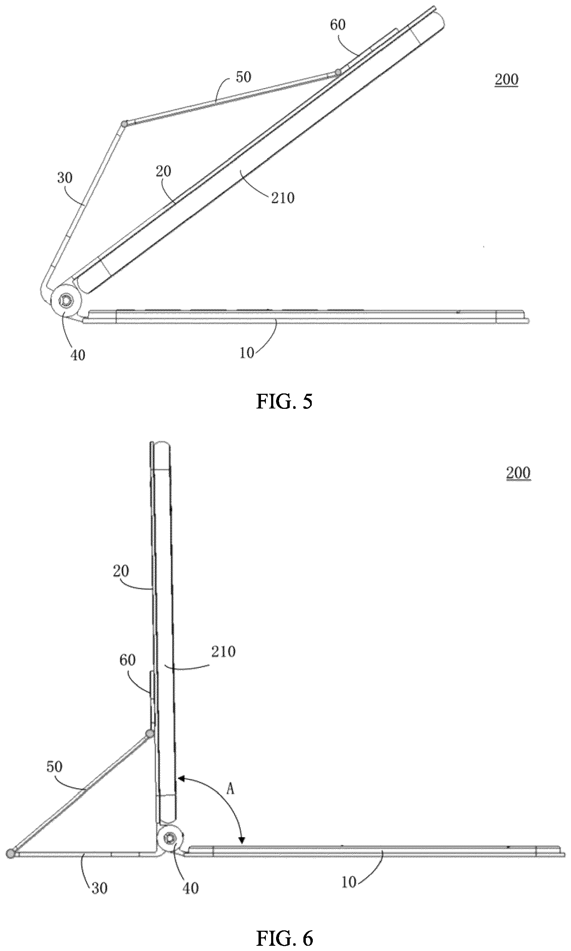

As shown in FIG. 5, a user may push the connecting plate 20 or the display apparatus 210 to open the support mechanism 100. As shown in FIG. 5, an included angle between the connecting plate 20 and the base plate 10 is still within the first included angle A. In this case, the connecting plate 20 drives the display apparatus 210 to flip together away from the base plate 10. The display apparatus 210 and an input part 220 are in a state of being relatively far away from each other and being separately exposed gradually. In this case, the support plate 30 and the gearbox 40 are in the engaged state, and the gearbox 40 may transfer rotation of the connecting plate 20 to the support plate 30. The support plate 30 rotates synchronously with the rotation of the connecting plate 20, and moves away from the base plate 10 at a higher rotation speed. In an embodiment, a rotation speed of the support plate 30 is twice a rotation speed of the connecting plate 20, that is, a transmission ratio of the gearbox 40 is 2:1.

Because the rotating plate 50 is rotatably connected to the support plate 30, a rotation speed difference between the support plate 30 and the connecting plate 20 drives the rotating plate 50 to rotate relative to the connecting plate 20. At the other end that is of the rotating plate 50 and that is away from the support plate 30, the rotating plate 50 is further rotatably connected to the sliding plate 60, and drives, through rotation, the sliding plate 60 to slide relative to the connecting plate 20. At a matching position between the sliding plate 60 and the connecting plate 20, an end that is of the sliding plate 60 and that is away from the rotating plate 50 slides from an end that is flush with an end portion of the connecting plate 20 as shown in FIG. 4 to an end that is lower than the end portion of the connecting plate 20. The sliding plate 60 approaches the support plate 30.

In a possible implementation, the rotating plate 50 is connected to the support plate 30 by using a flexible material, to implement a rotatable connection between the rotating plate 50 and the support plate 30. For example, when the support mechanism 100 in this application is used as the protective case, a material such as a leather case or a cloth case may be used as an external structure. In this case, the rotating plate 50 and the support plate 30 may be connected and rotated relative to each other by using a flexible material such as a leather case or a cloth case. It may be understood that a rotatable connection between the rotating plate 50 and the sliding plate 60 may also be implemented in the foregoing manner. A slidable connection between the sliding plate 60 and the connecting plate 20 may be implemented through magnetic adsorption, a guide rail, or the like. This is not specifically limited in this application.

FIG. 6 shows a state in which the connecting plate 20 rotates to the first included angle A relative to the base plate 10. In the state in FIG. 6, the first included angle A is approximately 90 degrees. In this case, the connecting plate 20 also rotates to an angle that the connecting plate 20 is approximately perpendicular to the base plate 10. The support plate 30 rotates to an angle of approximately 180 degrees to the base plate 10. In this case, the support plate 30 is approximately flush with the base plate 10, and the support mechanism 100 can implement attachment to a placement surface (usually a desktop) of the support mechanism 100 by using both the base plate 10 and the support plate 30, thereby increasing a contact area between the support mechanism 100 and the placement surface, and improving structural stability of the support mechanism 100. After the connecting plate 20 and the base plate 10 are at a 90-degree angle, the display apparatus 210 fixedly connected to the connecting plate 20 and the input apparatus 220 located on the base plate 10 are also at a 90-degree included angle, which can meet a requirement of the user for observing the display apparatus 210 and inputting an instruction on the input apparatus 220.

It may be understood that, in another embodiment, the first included angle A and the transmission ratio of the gearbox 40 may be slightly adjusted based on an actual requirement. For example, the first included angle A may be further set to be greater than 90 degrees. Because the user usually observes the display apparatus 210 from an inclined top view, the connecting plate 20 may further drive the display apparatus 210 to tilt upward, so that an observation line-of-sight of the user directly faces the display apparatus 210. In this case, the transmission ratio of the gearbox 40 may be appropriately reduced, so that when the connecting plate 20 rotates to the first included angle A that is greater than 90 degrees, the support plate 30 can be flush with the base plate 10, and reliable support from the support mechanism 100 can be implemented.

In some embodiments, when the connecting plate 20 rotates to the first included angle A relative to the base plate 10, an included angle between the support plate 30 and the base plate 10 may alternatively exceed 180 degrees. In other words, the support plate 30 may raise the base plate 10 relative to the placement surface. In this case, the base plate 10 is also inclined relative to the placement surface, and correspondingly, the input device 220 may also be inclined relative to the placement surface, which can improve input experience of the user.

The rotating plate 50 and the sliding plate 60, driven by the support plate 30, further rotate or slide relative to the connecting plate 20. Specifically, the rotating plate 50 rotates relative to both the support plate 30 and the sliding plate 60, and reduces an included angle between the rotating plate 50 and the support plate 30. The sliding plate 60 further approaches the support plate 30, and abuts against a middle part of the connecting plate 20. In this case, the support plate 30 is in contact with the placement surface. Therefore, gravity of the connecting plate 20 can be transferred to the rotating plate 50 through the sliding plate 60, and then the support plate 30 supports the rotating plate 50, thereby implementing support effect to the connecting plate 20 by the support plate 30. The rotating plate 50 and the sliding plate 60 can enhance the structural stability of the support mechanism 100.

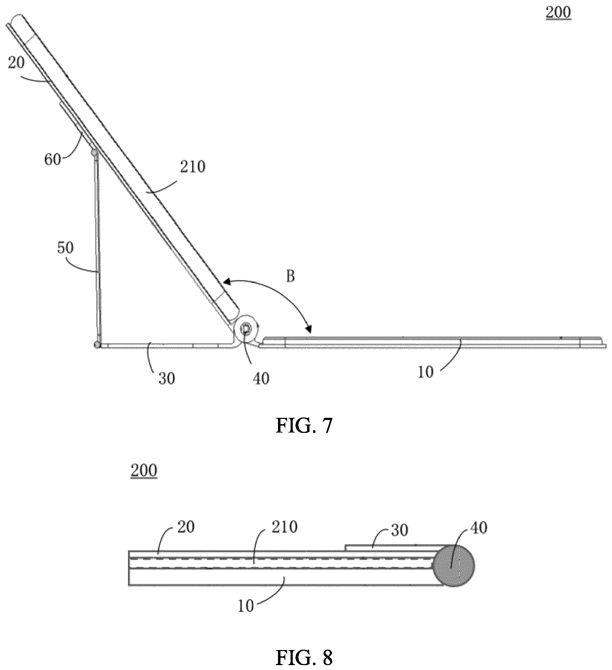

FIG. 7 shows a state in which an included angle between the connecting plate 20 and the base plate 10 exceeds the first included angle A. In the states in FIG. 4 to FIG. 6, the support plate 30 and the gearbox 40 are in the engaged state, and the support plate 30 rotates relative to the base plate 10 as the connecting plate 20 rotates. In the state shown in FIG. 7, the support plate 30 and the gearbox 40 are in the decoupled state. In this case, the support plate 30 does not rotate as the connecting plate 20 rotates, but maintains an angle and a matching relationship between the support plate 30 and the base plate 10, thereby providing reliable support for the support mechanism 100. In this case, the connecting plate 20 rotates relative to the base plate 10 to adjust an angle of the display apparatus 210 relative to the user, so that a line-of-sight of the user can directly face the display apparatus 210, thereby improving observation experience of the user.

Due to the presence of the support plate 30, a contact area between the support mechanism 100 and the placement surface is increased, or a distance between two fulcrums (when an included angle between the support plate 30 and the base plate 10 exceeds 180 degrees, one end of the support plate 30 and one end of the base plate 10 that are away from each other are in contact with the placement surface to form the fulcrums) of the support mechanism 100 and the placement surface is increased, which can improve support stability between the support mechanism 100 and the placement surface. When the connecting plate 20 further rotates between the first included angle A and the second included angle B, centers of gravity of the connecting plate 20 and the display apparatus 210 may both be in a contact range of the support mechanism 100 and the placement surface, thereby avoiding a risk that the electronic device 200 may tilt and fall back because the centers of gravity of the connecting plate 20 and the display apparatus 210 move backward.

As shown in the FIG. 7, when the connecting plate 20 further rotates beyond the first included angle A, because the support plate 30 no longer rotates with the connecting plate 20, the rotating plate 50 can continue to rotate relative to the support plate 30, and a rotation direction of the rotating plate 50 is a direction away from the support plate 30. In this case, the sliding plate 60 slides, driven by the rotating plate 50, away from the support plate 30. The sliding plate 60 and the rotating plate 50 may still transfer a weight of the connecting plate 20 and a weight of the display apparatus 210 to the support plate 30, to assist in the support for the support plate 20 and the display apparatus 210.

When the support mechanism 100 in this application needs to be folded, the user only needs to push the connecting plate 20 or the display apparatus 210, so that the connecting plate 20 or the display apparatus 210 rotates close to the base plate 10. When an included angle between the connecting plate 20 and the base plate 10 is greater than the first included angle A, the support plate 30 is fixed relative to the base plate 10, and the support plate 30 and the gearbox 40 are still in the decoupled state. When the included angle between the connecting plate 20 and the base plate 10 reaches the first included angle A, the support plate 30 and the gearbox 40 enter the engaged state, and the support plate 30 rotates relative to the base plate 10 as the connecting plate 20 rotates. In addition, because a rotation speed of the support plate 30 is higher, in a process in which the connecting plate 20 approaches the base plate 10, a rotation speed between the support plate 30 and the base plate 10 is higher. Finally, when the connecting plate 20 is approximately parallel to the base plate 10, the support plate 30 is also approximately parallel to the base plate 10, thereby implementing folding of the support mechanism 100.

FIG. 8 to FIG. 11 are diagrams of a structure of a support mechanism 100 according to another implementation of this application. As shown in FIG. 8 to FIG. 11, the support mechanism 100 includes only a base plate 10, a connecting plate 20, a support plate 30, and a gearbox 40. In this embodiment, when the support mechanism 100 is in a folded state, the connecting plate 20 is approximately parallel to the base plate 10, and the support plate 30 is located at a position that is of the connecting plate 20 and that faces away from the base plate 10, and is also approximately parallel to the connecting plate 20.

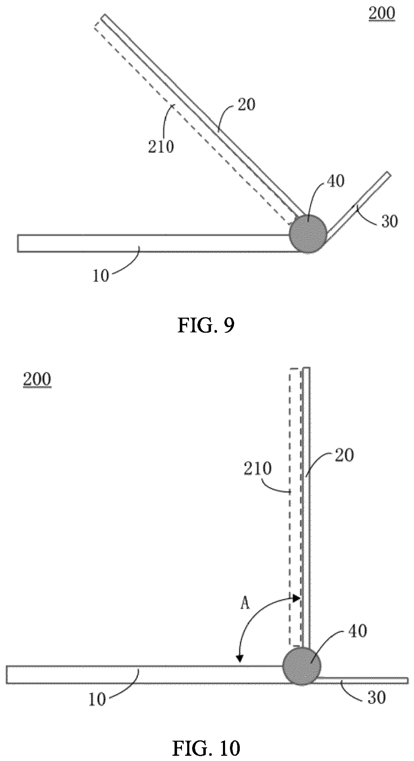

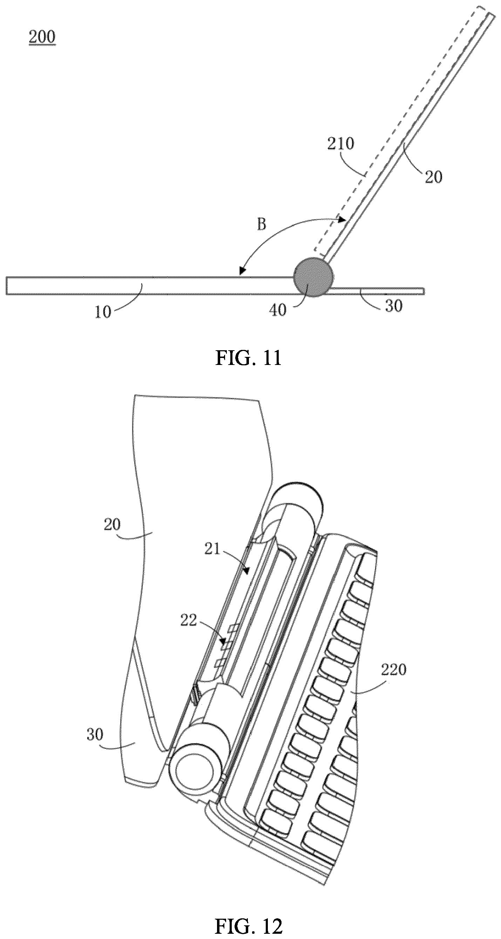

As shown in FIG. 9, the connecting plate 20 rotates relative to the base plate 10. In this case, the support plate 30 and the gearbox 40 are in an engaged state. The support plate 30 rotates at a higher speed driven by the connecting plate 20 and is away from the base plate 10. As shown in FIG. 10, the connecting plate 20 rotates to a first included angle A, and the support plate 30 and the base plate 10 are relatively fixed, so that reliable support of the support mechanism 100 is formed. As shown in FIG. 11, the connecting plate 20 further rotates relative to the base plate 10. In this case, the support plate 30 and the gearbox 40 are in a decoupled state, and the support plate 30 and the base plate 10 are relatively fixed. When reliable support is provided, a user is allowed to further adjust an observation angle of the display apparatus 210 fixedly connected to the connecting plate 20.

A movement process of folding the support mechanism 100 shown in FIG. 8 to FIG. 11 is a reverse movement of the foregoing process. Compared with the structure in FIG. 4 to FIG. 7, the support mechanism 100 in FIG. 8 to FIG. 11 only omits the structures of the rotating plate 50 and the sliding plate 60. The support mechanism 100 has fewer components and a smaller overall volume, thereby reducing costs of the support mechanism 100 and implementing miniaturization of the support mechanism 100.

As mentioned above, in the electronic device 200 in this application, the display apparatus 210 and the connecting plate 20 are fixedly connected. A communication connection between the display apparatus 210 and the input apparatus 220 needs to be further implemented. It may be understood that, when the display apparatus 210 and the connecting plate 20 are connected fixedly in an undetachable manner, a flexible connector may be disposed in the rotating shaft 11 of the base plate 10, to implement the communication connection between the input apparatus 220 located on the base plate 10 and the display apparatus 210 located on the connecting plate 20. For example, the flexible connector may be a structure such as a flexible flat cable. Further, by using a structure of the rotating shaft 11, a charging interface such as a type-C interface may be further provided at the rotating shaft 11, and is configured to implement an external power supply connection function of the electronic device 200. The rotating shaft 11 is connected to both the connecting plate 20 and the base plate 10. Therefore, it is convenient to arrange internal lines of the electronic device 200, and a power signal can be separately transferred to internal components of the display apparatus 210 and the base plate 10 by using the rotating shaft 11.

In another implementation, the display apparatus 210 and the connecting plate 20 may alternatively be connected fixedly in a detachable manner. Refer to FIG. 12. A positioning groove 21 may be provided in the connecting plate 20. A shape of the positioning groove 21 matches a shape of the display apparatus 210, so that the display apparatus 210 can be inserted into the positioning groove 21, and is fastened to the connecting plate 20. In some embodiments, a structure such as a magnetic component for adsorption or a fastener may be further disposed between the connecting plate 20 and the display apparatus 210, to strengthen a fixed connection between the connecting plate 20 and the display apparatus 210. The magnetic component for adsorption is further convenient for the user to dispose the display apparatus 210 on the connecting plate 20, or is convenient for the user to remove the display apparatus 210 from the connecting plate 20.

Further, a communication interface 22 may be further provided in the positioning groove 21, and correspondingly, a communication access end (not shown in the figure) is also provided on the display apparatus 210. When the display apparatus 210 is disposed in the positioning groove 21, a communication connection between the display apparatus 210 and the input apparatus 220 is implemented through cooperative conduction of the communication interface 22 and the communication access end. In some implementations, the communication interface 22 may be implemented in a POGO PIN manner.

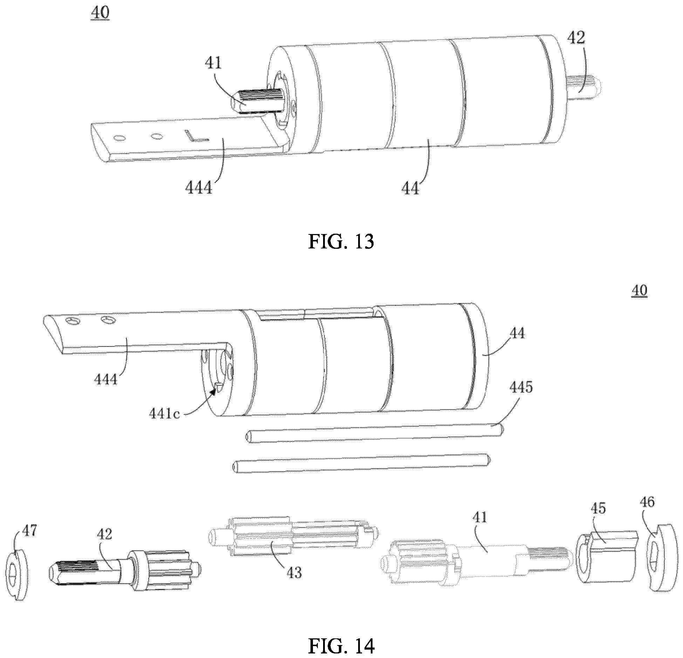

FIG. 13 is a schematic diagram of a structure of a gearbox 40 according to this application, and FIG. 14 is a schematic diagram of an exploded structure of the gearbox 40. The gearbox 40 includes an input shaft 41, an output shaft 42, an intermediate shaft 43, and a housing 44. In some embodiments, the gearbox 40 may further include a damping member 45, a first limiting member 46, and a second limiting member 47. The components of the gearbox 40 are mostly accommodated inside the housing 44, and are sealed and protected by the housing 44. The input shaft 41 is in a transmission connection to the output shaft 42 through the intermediate shaft 43, and the input shaft 41 and the output shaft 43 respectively extend out of the housing 44 from two opposite sides of the housing 44. The input shaft 41 is fixedly connected to the connecting plate 20 at an external position of the housing 44, and the output shaft 42 is fixedly connected to the support plate 30 on the other side of the housing 44. In an implementation, a rotation axis of the input shaft 41 is further collinear with a rotation axis of the output shaft 42, to reduce a volume of the gearbox 40.

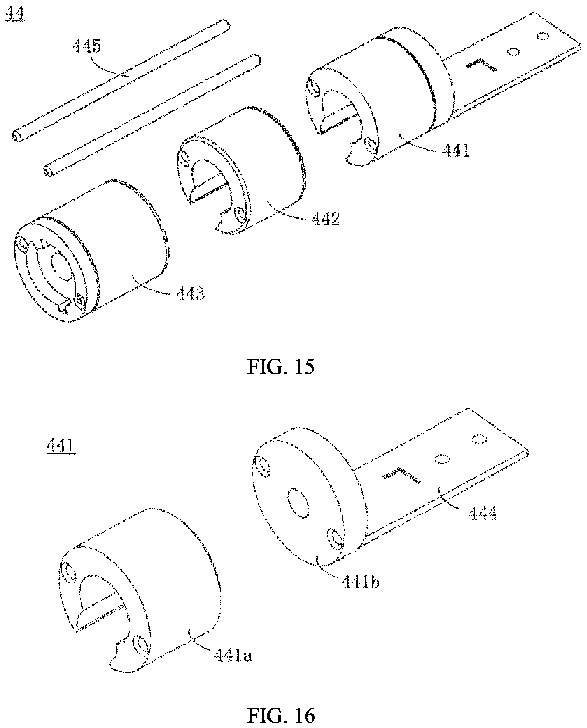

The housing 44 is further provided with a support foot 444 on a side that is of the housing 44 and that is close to the input shaft 41. The support foot 444 extends into the rotating shaft 11, and is fixedly connected to the rotating shaft 11. In this way, the gearbox 40 can be fixedly connected to the base plate 10, and a rotatable connection between the connecting plate 20 and the base plate 10 is implemented through the gearbox 40. FIG. 15 shows a structure of the housing 44. In this embodiment, the housing 44 is a three-segment structure, including a first segment 441, a second segment 442, and a third segment 443 that are arranged sequentially. The housing 44 is formed as a whole by connecting the first segment 441, the second segment 442, and the third segment 443 using two connecting rods 445. The three-segment structure facilitates assembly of the internal components of the gearbox 40. When an internal component at an end is faulty, only a part of the housing 44 may be disassembled for repair or maintenance without completely disassembling the gearbox 40, which facilitates maintenance of the gearbox 40. In addition, the three-segment housing 44 is also convenient for assembly and molding after being separately manufactured and processed.

Refer to FIG. 16. The first segment 441 is located on a side close to the input shaft 41, and the first segment 441 is further split into a first cylindrical portion 441a and a first end portion 441b. The connecting rod 445 passes through both the first cylindrical portion 441a and the first end portion 441b, and implements a fixed connection between the first cylindrical portion 441a and the first end portion 441b. The support foot 444 is located on the first end portion 441b, and the first cylindrical portion 441a is located between the first end portion 441b and the second segment 442. A first limiting block 441c (refer to FIG. 14) is further disposed on the first end portion 441b. In this embodiment, the first limiting member 46 is sleeved onto the input shaft 41, and the first limiting member 46 and the first limiting block 441c cooperate with each other to limit a rotation angle of the input shaft 41 in the housing 44. It may be understood that, under cooperation of the first limiting member 46 and the first limiting block 441c, the rotation angle of the input shaft 41 in the housing 44 may be corresponding to the second included angle B of the connecting plate 20 relative to the base plate 10. In other words, the support mechanism 100 in this application limits a rotation angle of the connecting plate 20 relative to the base plate 10 by using the gearbox 40.

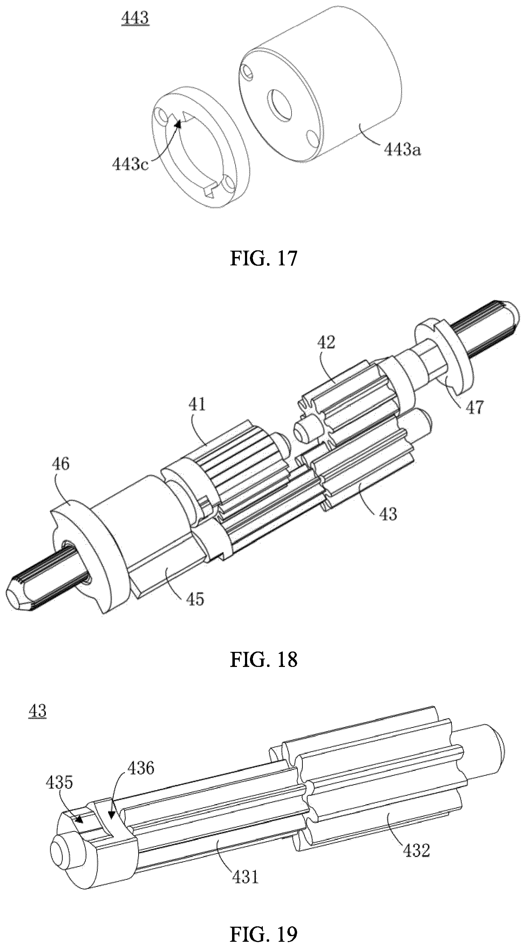

Refer to FIG. 17. The third segment 443 is located on a side close to the output shaft 42. The third segment 443 is further split into a second cylindrical portion 443a and a second end portion 443b. The connecting rod 445 passes through both the second cylindrical portion 443a and the second end portion 443b, and implements a fixed connection between the second cylindrical portion 443a and the second end portion 443b. In this embodiment, a second limiting block 443c is further disposed on the second end portion 443b. The second limiting member 47 is sleeved on the output shaft 42, and the second limiting member 47 cooperates with the second limiting block 443c to limit a rotation angle of the output shaft 41 in the housing 44. It may be understood that, under cooperation of the second limiting member 47 and the second limiting block 443c, the rotation angle of the output shaft 42 in the housing 44 may be corresponding to the first included angle A of the connecting plate 20 relative to the base plate 10. Because the output shaft 42 is connected to the support plate 30, after the connecting plate 20 rotates to the first included angle A relative to the base plate 10, the support plate 30 and the gearbox 40 are in a decoupled state, and the support plate 30 no longer rotates relative to the base plate 10. Therefore, the cooperation of the second limiting member 47 and the second limiting block 443c can further limit the support plate 30 in the decoupled state, to ensure that the support plate 30 and the base plate 10 are relatively fixed.

Refer to FIG. 18. In the gearbox 40 in this application, the input shaft 41 is in a transmission connection to the output shaft 42 through the intermediate shaft 43. FIG. 19 shows a structure of the intermediate shaft 43. The intermediate shaft 43 includes, along a length direction of the intermediate shaft 43, a first gear 431 and a second gear 432, where the first gear 431 is configured to cooperate with the input shaft 41, and the second gear 432 is configured to cooperate with the output shaft 42. When the input shaft 41 drives the intermediate shaft 43 to rotate through cooperation with the first gear 431, the intermediate shaft 43 may drive, through the second gear 432, the output shaft 42 to rotate synchronously. There is a tooth quantity difference between the first gear 431 and the second gear 432. In an embodiment, a quantity of teeth of the first gear 431 is half of a quantity of teeth of the second gear 432, so that a rotation speed of the input shaft 41 is half of a rotation speed of the output shaft 42. It may be understood that, in some other embodiments, the tooth quantity difference between the first gear 431 and the second gear 432 may be set to another value, or a transmission ratio between the input shaft 41 and the output shaft 42 is jointly implemented through cooperation of the first gear 431 and the input shaft 41 and cooperation of the second gear 432 and the output shaft 42.

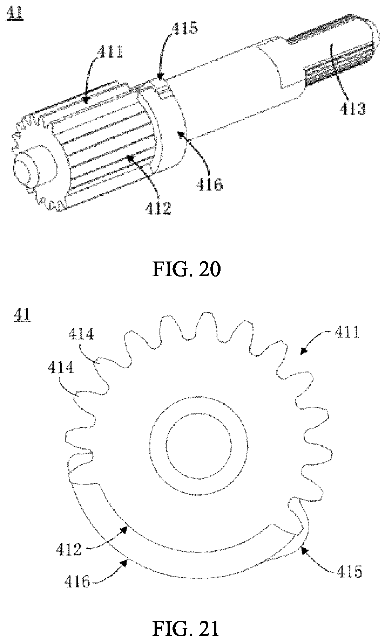

FIG. 20 shows a structure of the input shaft 41. The input shaft 41 is provided with an engaged portion 411, a decoupled portion 412, and an input segment 413. The input segment 413 is located at one end of the input shaft 41, and extends into the housing 44 to be fixedly connected to the connecting plate 20. The engaged portion 411 and the decoupled portion 412 are located at the other end of the input shaft 41, and are configured to cooperate with the first gear 431 of the intermediate shaft 43.

Refer to FIG. 21. At a matching position between the input shaft 41 and the first gear 431, the engaged portion 411 and the decoupled portion 412 are located in a same circumferential direction, and the engaged portion 411 and the decoupled portion 412 are disposed side by side along the circumferential direction. The engaged portion 411 is provided with an engaged tooth 414. The engaged tooth 414 is configured to engage with the first gear 431, and implement transmission when the gearbox 40 and the support plate 30 are in an engaged state. The decoupled portion 412 is constructed as a cylindrical shape, and an outer contour of the decoupled portion 412 is smaller than a tooth bottom contour of the engaged tooth 414. Therefore, when the input shaft 41 rotates relative to the intermediate shaft 43 and the decoupled portion 412 cooperates with the first gear 431, the decoupled portion 412 and the first gear 431 are slidable with each other, and the input shaft 41 and the intermediate shaft 43 cannot provide power transmission, so that the gearbox 40 and the support plate 30 are in a decoupled state.

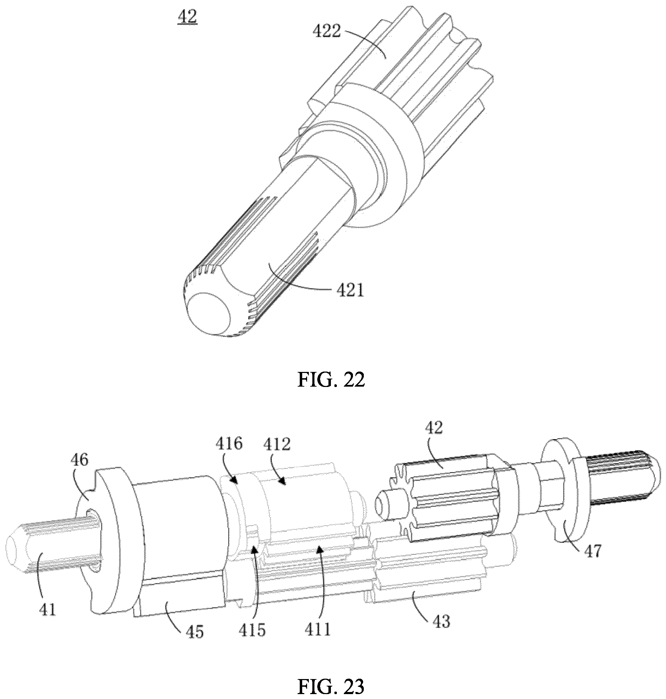

FIG. 22 shows a structure of the output shaft 42. The output shaft 42 includes, along a length direction of the output shaft 42, an output segment 421 and an output gear 422. The output segment 421 extends out of the housing 44 and is fixedly connected to the support plate 30, and the output gear 422 is engaged with the second gear 432 of the intermediate shaft 43 to implement transmission. It may be understood that, when the first gear 431 of the intermediate shaft 43 is engaged with the engaged portion 411 of the input shaft 41, the intermediate shaft 43 rotates driven by the connecting plate 20, and the output shaft 42 rotates driven by the second gear 432. When the first gear 431 of the intermediate shaft 43 is engaged with the decoupled portion 412 of the input shaft 41, the intermediate shaft 43 is static relative to the input shaft 41, and the output shaft 42 is also static relative to the intermediate shaft 43.

Therefore, in this application, through cooperation of the input shaft 41, the output shaft 42, and the intermediate shaft 43, the gearbox 40 implements conversion between an engaged state and a decoupled state between the gearbox 40 and the support plate 30, so that a rotation speed of the support plate 30 is greater than a rotation speed of the connecting plate 20, thereby implementing a motion state of the support mechanism 100 in this application. It should be pointed out that a structure of the engaged portion 411 and the decoupled portion 412 in the input shaft 41 may also be constructed at a position of the first gear 411. The conversion between the foregoing two states is implemented through engaging and sliding of the intermediate shaft 43 relative to the input shaft 41. Alternatively, in some embodiments, a structure of the engaged portion 411 and the decoupled portion 412 may be disposed on the second gear 432 or the output gear 422, and is configured to implement engaging and sliding actions between the input shaft 41 and the output shaft 42, so that a motion state of the support mechanism 100 in this application can be implemented.

Refer to FIG. 19 and FIG. 20 again. In an embodiment, a first protruding shoulder 415 is further disposed on the input shaft 41. The first protruding shoulder 415 is located along a length direction of the input shaft 41 and is located on a side of the engaged portion 411 and the decoupled portion 412. Correspondingly, a first groove 435 is further provided at a position that is of the intermediate shaft 43 and that matches the first protruding shoulder 415, and the first groove 435 is also located along a length direction of the intermediate shaft 43 and is located on a side of the first gear 431. In addition, as shown in the figure, the first protruding shoulder 415 is located between the engaged portion 411 and the input segment 413. The first groove 435 is located on the other side that is of the first gear 431 and that faces away from the second gear 432. In this way, the first groove 435 can be exposed outside a side of the intermediate shaft 43. Compared with a structure in which the first groove 435 is located between the first gear 431 and the second gear 432, a shape in which the first groove 435 is exposed separately is more conducive to processing of the first groove 435, which reduces manufacturing costs.

The first protruding shoulder 415 further partially coincides with a position of the decoupled portion 412 of the input shaft 41. The first protruding shoulder 415 is configured to cooperate with the first groove 435. After the first protruding shoulder 415 rotates with the input shaft 41 and extends into the first groove 435, the first protruding shoulder 415 may abut against the first groove 435. Because of a position relationship between the first protruding shoulder 415 and the decoupled portion 412, when the gearbox 40 and the support plate 30 are in the decoupled state, the first protruding shoulder 415 can extend into the first groove 435, and continuously abuts against the first groove 435 in a process in which the gearbox 40 and the support plate 30 are in the decoupled state.

In this embodiment, the input shaft 41 may prevent the intermediate shaft 43 from rotating reversely relative to the input shaft 41 when the first protruding shoulder 415 abuts against the first groove 435, so that the intermediate shaft 43 is maintained to be stable relative to the input shaft 41 when the gearbox 40 and the support plate 30 are in a decoupled state. Specifically, when the first protruding shoulder 415 abuts against the first groove 435, the intermediate shaft 43 can always be in the state when the first gear 431 of the intermediate shaft 43 and the engaged portion 411 are in the decoupled state. In a process in which the input shaft 41 further rotates relative to the intermediate shaft 43, the intermediate shaft 43 in this state is static relative to the housing 44, and does not rotate reversely in the housing 44, to maintain the output shaft 42 to be relatively fixed. Therefore, a relative position between the support plate 30 and the base plate 10 is also maintained. When the connecting plate 20 rotates reversely to fold the support mechanism 100, the engaged portion 411 of the input shaft 41 rotates toward the first gear 431 again. Because the first gear 431 is relatively fixed, the engaged portion 411 may be re-engaged with the first gear 431, and drive the intermediate shaft 43 to rotate reversely to fold the support plate 30.

In an embodiment, a second protruding shoulder 416 is further disposed on the input shaft 41. The second protruding shoulder 416 is located along the length direction of the input shaft 41 and is located between the first protruding shoulder 415 and the engaged portion 411. Correspondingly, a second groove 436 is also provided at a position that is of the intermediate shaft 43 and that matches the second protruding shoulder 416, and the second groove 436 is located along the length direction of the intermediate shaft 43 and is located between the first groove 435 and the first gear 431. The second protruding shoulder 416 is configured to cooperate with the second groove 436 to limit a maximum rotation angle of the input shaft 41 relative to the intermediate shaft 43.

A radial size of the second protruding shoulder 416 is smaller than that of the first protruding shoulder 415. Therefore, in a circumferential direction of the input shaft 41, the first protruding shoulder 415 may be further convexly disposed outside the second protruding shoulder 416. Correspondingly, a distance between the second groove 436 and a rotation axis of the intermediate shaft 43 is also greater than a distance between the first groove 435 and the rotation axis of the intermediate shaft 43, that is, a depth of the second groove 436 is smaller than a depth of the first groove 435. The first groove 435 is provided closer to the outer portion of the intermediate shaft 43 than the second groove 436. To be specific, in a length direction of the intermediate shaft 43, the first groove 435 is exposed outside the second groove 436, which is more conducive to processing of the first groove 435, and does not affect processing of the second groove 436. In this way, a processing process of the intermediate shaft 43 is simpler, and costs are reduced.

The second protruding shoulder 416 cooperates with the second groove 436 to limit the maximum rotation angle of the input shaft 41 relative to the intermediate shaft 43. Specifically, when the decoupled portion 412 of the input shaft 41 rotates to cooperate with the first gear 431, the second protruding shoulder 416 also rotates into the second groove 436. When the input shaft 41 further rotates relative to the intermediate shaft 41, because the decoupled portion 412 and the first gear 431 are slidable with each other, and the first protruding shoulder 415 and the first groove 435 has an abutting and matching relationship, the intermediate shaft 43 is relatively fixed, and rotation of the input shaft 41 does not drive the intermediate shaft 43 to rotate. When the input shaft 41 rotates till the second protruding shoulder 416 abuts against an edge of the second groove 436, the input shaft 41 cannot further rotate relative to the intermediate shaft 43, so that a maximum rotation angle (that is, the second included angle B) of the connection portion 20 relative to the base plate 10 is limited.

It may be understood that effect of limiting the rotation angle through cooperation of the second protruding shoulder 416 and the second groove 436 is similar to effect of limiting the rotation angle of the input shaft 41 in the housing 44 through cooperation of the first limiting member 46 and the first limiting block 441c in the foregoing embodiment. In other words, under cooperation of the first limiting member 46 and the first limiting block 441c, the rotation angle of the input shaft 41 in the housing 44 may be corresponding to the second included angle B of the connecting plate 20 relative to the base plate 10. The cooperation of the second protruding shoulder 416 and the second groove 436 and the cooperation of the first limiting member 46 and the first limiting block 441c may support each other. The two cooperation relationships are jointly provided to limit the maximum rotation angle of the connecting plate 20 relative to the base plate 10. It may be understood that the rotation angle of the connecting plate 20 is limited jointly based on the two cooperation relationships, which can improve reliability of the support mechanism 100 in this application. When one of the cooperation relationships fails, the other cooperation relationship can continue to take effect, and ensure reliable operation of the support mechanism 100.

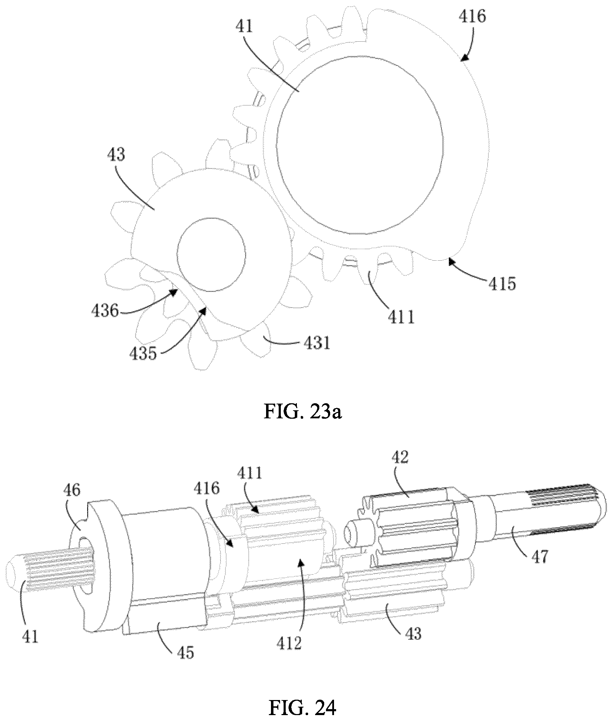

FIG. 23 to FIG. 27 are schematic diagrams of a cooperation relationship between the input shaft 41 and the intermediate shaft 43 in a motion process of the support mechanism 100. FIG. 23a to FIG. 27a are side views of corresponding structures.

In FIG. 23 and FIG. 23a, the support mechanism 100 is in a folded state. In this case, the connecting plate 20 and the base plate 10 are approximately parallel to each other. In this case, the engaged portion 411 of the input shaft 41 and the first gear 431 of the intermediate shaft 43 are engaged with each other. The first protruding shoulder 415 and the first groove 435 are far away from each other, and the second protruding shoulder 416 and the second groove 436 are far away from each other, not in a cooperation state.

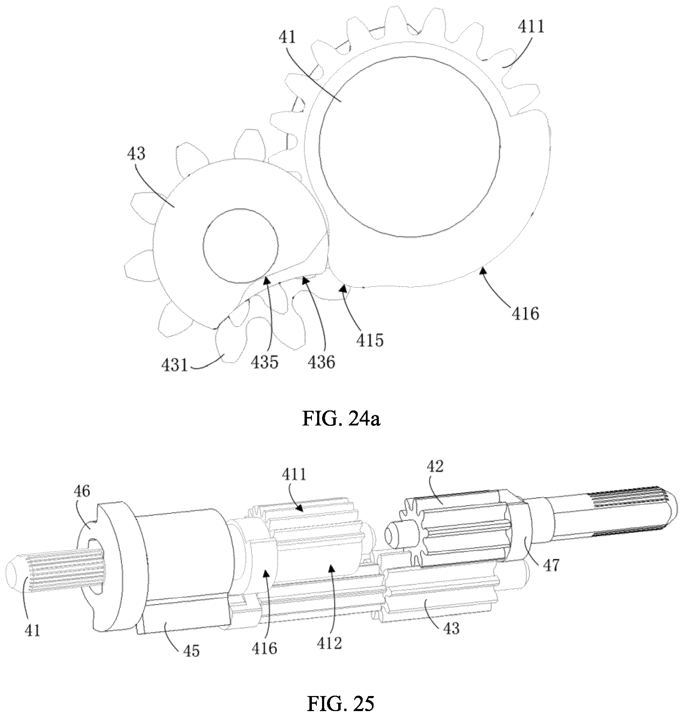

In FIG. 24 and FIG. 24a, when the support mechanism 100 is opened, the connecting plate 20 rotates away from the base plate 10. The connecting plate 20 drives the input shaft 41 to rotate. In this case, under cooperation of the first gear 431 and the engaged portion 411 of the input shaft 41, the intermediate shaft 43 rotates reversely as the input shaft 41 rotates, so that the second gear 432 drives the output shaft 42 to rotate. It may be understood that a rotation direction of the output shaft 42 is the same as a rotation direction of the input shaft 41. In an implementation, a rotation axis of the input shaft 41 is collinear with a rotation axis of the output shaft 42, to reduce an overall volume of the gearbox 40. The input shaft 41 rotates relative to the intermediate shaft 43, so that the first protruding shoulder 415 is relatively close to the first groove 435, and the second protruding shoulder 416 is also relatively close to the second groove 436.

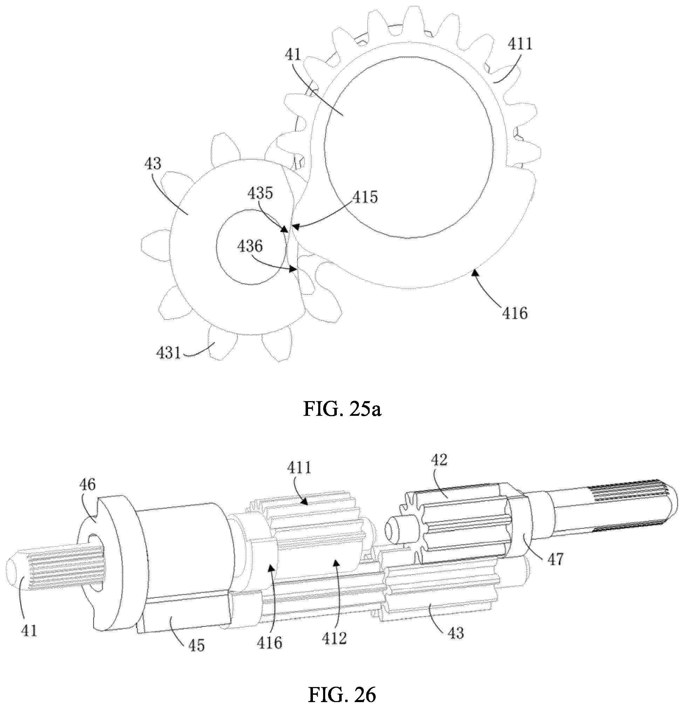

In FIG. 25 and FIG. 25a, the connecting plate 20 rotates relative to the base plate 10 to a position at a first angle A. In this case, the input shaft 41 rotates to a position at which the engaged portion 411 is not engaged with the first gear 431, that is, the decoupled portion 412 of the input shaft 41 rotates to a position at which the decoupled portion 412 cooperates with the first gear 431. In this case, the first protruding shoulder 415 abuts against the first groove 435, the intermediate shaft 43 is maintained to be fixed under the abutting of the first protruding shoulder 415, and the output shaft 42 is also in a relatively fixed state when the second gear 432 is engaged with the output gear 422. In this case, the support plate 30 fixedly connected to the output shaft 42 can maintain a position relative to the base plate 10, thereby improving structural stability of the support mechanism 100.

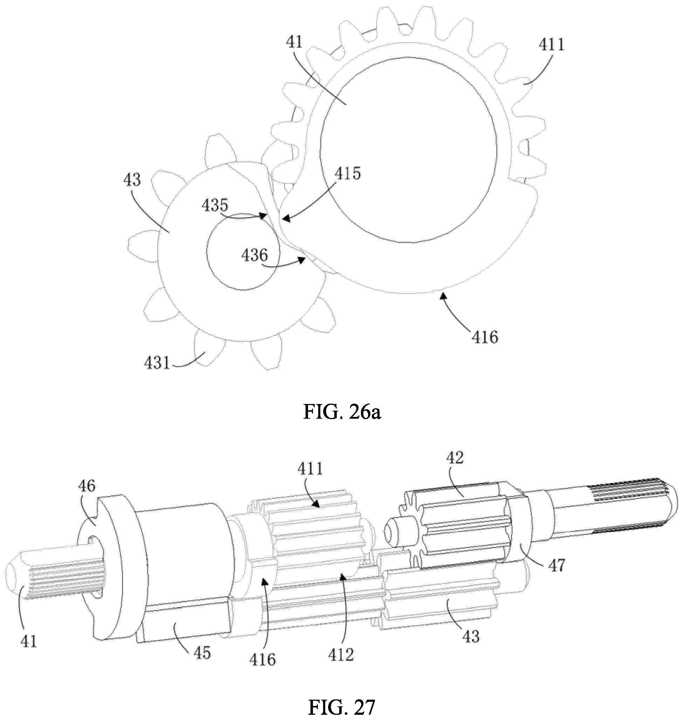

In FIG. 26 and FIG. 26a, the connecting plate 20 continues to rotate toward the base plate 10, and an included angle between the connecting plate 20 and the base plate 10 is greater than the first included angle A. In this case, the decoupled portion 412 of the input shaft 41 continuously slides relative to the first gear 431, and the first protruding shoulder 415 is gradually removed from the first groove 435 against which the first protruding shoulder 415 abuts originally. However, a gap between the first protruding shoulder 415 and the first groove 435 can still ensure that the intermediate shaft 43 is relatively fixed. The input shaft 41 can continue to rotate relative to the intermediate shaft 43, that is, the connecting plate 20 can further rotate relative to the base plate 10 when positions of the support plate 30 and the base plate 10 are relatively fixed. In addition, the second protruding shoulder 416 starts to extend into the second groove 436, and gradually approaches a side edge of the second groove 436.

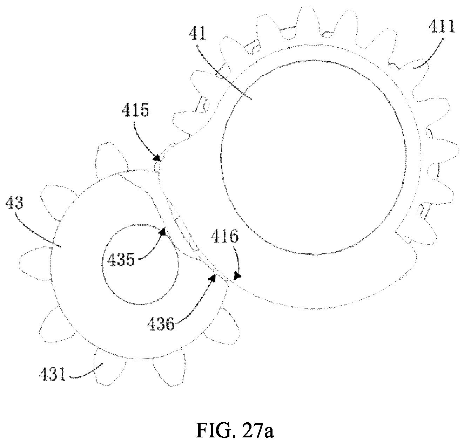

In FIG. 27 and FIG. 27a, the connecting plate 20 rotates to a position at which the second included angle B is formed between the connecting plate 20 and the base plate 10. In this case, the decoupled portion 412 cooperates with the first gear 431, and slides relative to the first gear 431. The abutting contact between the first protruding shoulder 415 and the first groove 435 is eliminated, and the intermediate shaft 43 is maintained to be relatively fixed based on the cooperation of the second protruding shoulder 416 and the second groove 436. Specifically, the second protruding shoulder 416 rotates to a position in contact with the second groove 436, the second protruding shoulder 416 and the second groove 436 abut against each other, the input shaft 41 cannot continue to rotate relative to the intermediate shaft 43, and the input shaft 41 rotates to a maximum angle relative to the intermediate shaft 43.

Therefore, in this application, the support mechanism 100 is transformed from a folded state to an unfolded state, and based on a structure of the gearbox 40, effects that the support plate 30 is opened to assist the base plate 10 to form support and the connecting plate 20 can further rotate relative to the base plate 10 to adjust an included angle between the connecting plate 20 and the base plate 10 are achieved. It may be understood that, when the support mechanism 100 is transformed from the unfolded state to the folded state, cooperation of the input shaft 41 and the intermediate shaft 43 in the gearbox 40 gradually changes from the cooperation state in FIG. 27 to the cooperation state in FIG. 23. The user only needs to push the connecting plate 20 to complete all folding actions, which has a simple operation.

As shown in FIG. 14, a damping member 45 is further disposed in the gearbox 40. The damping member 45 is sleeved on the input shaft 41 and rotates with the connecting plate 20. The damping member 45 has a positioning function at any angle, and may be configured to implement hover positioning at any angle in a process in which the connecting plate 20 rotates relative to the base plate 10. In the embodiment in which the rotating plate 50 and the sliding plate 60 are disposed in the support mechanism 100, the damping member 45 may further cooperate with an auxiliary support structure formed by the support plate 30, the rotating plate 50, and the sliding plate 60, to jointly implement a hover positioning function at any angle of the connecting plate 20 relative to the base plate 10, thereby improving motion reliability of the support mechanism 100 in this application.

In some embodiments, the support mechanism 100 in this application may further include two gearboxes 40. The two gearboxes 40 are arranged, in a symmetrical shape, on two sides of the connecting plate 20. The two gearboxes 40 are both connected between the connecting plate 20 and the support plate 30, and work together to implement motion transfer between the connecting plate 20 and the support plate 30. In addition, a structure of the gearbox 40 may be provided as a cylinder. A shape of the gearbox 40 is consistent with a shape of the rotating shaft 11 of the base plate 10, and both are cylinder structures with equal diameters. In this way, the gearbox 40 may be disposed coaxially with the rotating shaft 11, to improve integration of the support mechanism 100 and reduce an overall volume of the support mechanism 100.

The foregoing descriptions are merely specific embodiments of this application, but are not intended to limit the protection scope of this application. Any variation or replacement, for example, reducing or adding a mechanical part, and changing a shape of a mechanical part, readily figured out by a person skilled in the art within the technical scope disclosed in this application shall fall within the protection scope of this application. When no conflict occurs, the embodiments of this application and the features in the embodiments may be mutually combined. Therefore, the protection scope of this application shall be subject to the protection scope of the claims.

## Claims

1. A support mechanism, comprising a base plate, a connecting plate, a support plate, and a gearbox, wherein
the connecting plate is rotatably connected to the base plate to be opened or closed relative to the base plate;
the support plate is rotatably connected to the connecting plate through the gearbox, and the support plate is located on a side that is of the connecting plate and that faces away from the base plate;
a connection between the gearbox and the support plate comprises an engaged state and a decoupled state;
in a process in which the connecting plate is opened from a closed state to a first included angle relative to the base plate, the gearbox and the support plate are in the engaged state, the connecting plate drives, through the gearbox, the support plate to rotate, and a rotation speed of the support plate is greater than a rotation speed of the connecting plate; and
in a process in which the connecting plate is opened from the first included angle to a second included angle relative to the base plate, the gearbox and the support plate are in a released state, and the connecting plate does not drive the support plate to rotate, wherein the second included angle is greater than the first included angle.

2. The support mechanism according to claim 1, wherein the gearbox comprises an input shaft, an intermediate shaft, and an output shaft, the input shaft is fixedly connected to the connecting plate, the output shaft is fixedly connected to the support plate, the intermediate shaft comprises, along a length direction of the intermediate shaft, a first gear and a second gear that are opposite to each other, the output shaft cooperates with the second gear for transmission, the input shaft cooperates with the first gear for transmission, and a quantity of teeth of the first gear is less than a quantity of teeth of the second gear, so that the rotation speed of the support plate is greater than the rotation speed of the connecting plate.

3. The support mechanism according to claim 2, wherein an engaged portion and a decoupled portion are disposed along a circumferential direction and are disposed at a matching position between the input shaft and the intermediate shaft; when the gearbox and the support plate are in the engaged state, the engaged portion and the first gear are engaged with each other; and when the gearbox and the support plate are in the decoupled state, the decoupled portion slides relative to the first gear.

4. The support mechanism according to claim 3, wherein a first protruding shoulder is further disposed at the matching position between the input shaft and the intermediate shaft, the first protruding shoulder is located along a length direction of the input shaft and is located on a side of the engaged portion, a first groove is provided at a position that is of the intermediate shaft and that is corresponding to the first protruding shoulder, and when the gearbox and the support plate are in the decoupled state, the first protruding shoulder extends into the first groove to prevent the intermediate shaft from rotating reversely relative to the input shaft.

5. The support mechanism according to any one of claim 4, wherein a second protruding shoulder is further disposed at the matching position between the input shaft and the intermediate shaft, the second protruding shoulder is also located along the length direction of the input shaft and is located on a side of the engaged portion, a second groove is provided at a position that is of the intermediate shaft and that is corresponding to the second protruding shoulder, and when the gearbox and the support plate are in the decoupled state, the second protruding shoulder cooperates with the second groove to limit a rotation angle of the input shaft relative to the base plate.

6. The support mechanism according to any one of claims 1 to 5, wherein a rotation axis of the input shaft is collinear with a rotation axis of the output shaft.

7. The support mechanism according to any one of claims 1 to 6, wherein a damping member is further disposed in the gearbox, and the damping member is sleeved on the input shaft and is configured to implement positioning in a process in which the connecting plate rotates relative to the base plate.

8. The support mechanism according to any one of claims 1 to 7, wherein the gearbox comprises a housing and a first limiting member, the input shaft, the intermediate shaft, and the output shaft are all accommodated in an inner cavity of the housing, the first limiting member is sleeved on the input shaft, a first limiting block is further convexly disposed at a position that is of the inner cavity and that is corresponding to the first limiting member, and the first limiting block is configured to cooperate with the first limiting member to limit the rotation angle of the input shaft relative to the base plate; and/or
the gearbox comprises a second limiting member, the second limiting member is sleeved on the output shaft, a second limiting block is further convexly disposed at a position that is of the inner cavity and that is corresponding to the second limiting member, and the second limiting block is configured to cooperate with the second limiting member to limit a rotation angle of the output shaft relative to the base plate.

9. The support mechanism according to any one of claims 1 to 8, wherein the support mechanism further comprises a rotating plate and a sliding plate, the rotating plate is located between the support plate and the sliding plate, and is rotatably connected to both the support plate and the sliding plate, and the sliding plate is further slidably connected to the connecting plate.

10. An electronic device, comprising a display apparatus, an input apparatus, and the support mechanism according to any one of claims 1 to 9, wherein the display apparatus is fixedly connected to the connecting plate, the input apparatus is constructed on the base plate of the support mechanism, the input apparatus is located on a side that is of the base plate and that faces the connecting plate, and the input apparatus and the display apparatus are in a communication connection.

11. The electronic device according to claim 10, wherein the connecting plate comprises a positioning groove, and the positioning groove is configured to accommodate and fasten the display apparatus; and/or
the connecting plate comprises a magnetic component, and the magnetic component is configured to fasten the display apparatus in an attachment and adsorption manner.
